# EUROPÄISCHE PATENTANMELDUNG

(11) **EP 1 078 684 A1**
(43) Veröffentlichungstag der Anmeldung: **28.02.2001**
(21) Anmeldenummer: 99810758.5
(22) Anmeldetag: 24.08.1999
(51) Int. Cl.: B01J 19/32

(54) **Geordnete Packung für Trennkolennen**

(71) Anmelder: Sulzer Chemtech AG, 8404 Winterthur (CH)
(72) Erfinder: Kessler, Alwin, 9546 Tuttwil (CH)
(74) Vertreter: Sulzer Management AG

(57) **Zusammenfassung**

Die geordnete Packung (10) für Trennkolonnen (100) enthält profilierte Lagen (2, 2') und in diesen angeordnete Kanälen (3, 3'), die schräg zu einer Hauptstömungsrichtung (103) orientiert sind. Die Lagen sind aus folienartigen oder gewebeförmigen Materialstreifen (20a) zu einem Profil geformt, beispielsweise plissiert. Geformte Kanalkanten (25) sind stumpf oder abgerundet. Ein Seitenrand (21a, 210) des Materialstreifens kommt in der Packung an das untere Ende eines Packungselements zu liegen. Die unten liegenden Seitenränder (210) sind bearbeitet und dadurch so ausgebildet, dass die Randpunkte jeweils eine Kurve (21 b) bilden, die zwischen zwei parallelen Ebenen liegt (211, 212), die in einem Abstand von weniger als 2 mm, vorzugsweise weniger als 0.5 mm, von einander entfernt sind.

## Beschreibung

Die Erfindung betrifft eine geordnete Packung für Trennkolonnen gemäss Oberbegriff von Anspruch 1 oder Anspruch 2, eine Kolonne mit einer solchen Packung sowie ein Verfahren zur Herstellung der Packung.

In Trennkolonnen werden beispielsweise Destillationsverfahren durchgeführt, bei denen zu einer Stofftrennung ein Stoffaustausch stattfindet, nämlich zwischen zwei Fluiden, die eine kondensierte, flüssige sowie eine dampfförmige Phase bilden. Eine gute Trennleistung erhält man mit Packungen, in denen die kondensierte Phase als gleichmässig fliessender Rieselfilm einem ebenfalls gleichmässig fliessenden Dampfstrom ausgesetzt wird. Es gibt verschiedene Störelemente in Trennkolonnen, die ein gleichmässiges Strömen der Fluide beeinträchtigen: beispielsweise der seitliche Packungsrand oder vertikale Stossstellen zwischen Teilen eines Packungselements, die in der Kolonne auf gleicher Höhe nebeneinander angeordnet sind. Mit geordneten Packungen, die eine geeignete Struktur aufweisen, beispielsweise eine Kreuzkanalstruktur, lassen sich Inhomogenitäten, die aufgrund von Störelementen entstanden sind, teilweise wieder ausgleichen.

Im Fall einer Kreuzkanalstruktur ist die Packung aus in Lagen angeordneten Kanälen gebildet, die schräg zu einer Hauptstömungsrichtung orientiert sind. Die Kanäle benachbarter Lagen bilden Kreuzungsstellen auf einer Ebene, an der die sich kreuzenden Kanäle gegeneinander offen sind. Hergestellt werden die Lagen aus Materialstreifen durch Plissieren, bei dem zickzackartig gefaltete oder gewellte Folien entstehen. Geometrische Verhältnisse, die sich beim Plissieren ergeben, sind in der EP-A 0 739 846 (= P.6670) dargestellt.

Bei Versuchen mit Packungen, deren Kreuzkanalstruktur modifiziert worden waren, machte man Beobachtungen, die zur Vermutung führten, dass weitere, noch nicht bemerkte Störelemente existieren müssen. Bei den Packungen dieser Versuche hatte man die unteren Ränder der Lagen umgeformt, wobei man mit einer Nachbearbeitung dafür sorgte, dass die unteren Randkanten geradlinig waren. Mit diesen Packungen erhielt man gute Trennleistungen, die besser als erwartet waren. Das Ergebnis war nicht mit der Erfahrung im Einklang. Packungen mit Kreuzkanalstruktur, deren Faltkanten scharfwinklig ausgebildet sind, haben auch Lagen mit unteren Randkanten, die in einer Ebene liegen. Es war aber bekannt, dass bei Packungen, deren Faltkanten abgerundet sind, bessere Trennleistungen als bei scharfwinkligen Faltkanten erzielbar sind. Man sah sich so mit einer Diskrepanz zwischen Erfahrung und neuer Beobachtung konfrontiert und kam daher zur Vermutung, dass bei den gebräuchlichen Packungen Störeffekte vorliegen müssen, die noch nicht bekannt waren und daher noch nicht beachtet wurden.

Aufgabe der Erfindung ist es, eine Packung zu schaffen, bei der die noch nicht beachteten Störeffekte beseitigt oder zumindest reduziert sind. Diese Aufgabe wird durch die im Anspruch 1 oder 2 definierte Packung gelöst.

Die geordnete Packung für Trennkolonnen enthält profilierte Lagen und in diesen angeordnete Kanäle, die schräg zu einer Hauptstömungsrichtung orientiert sind. Die Lagen sind aus folienartigen oder gewebeförmigen Materialstreifen zu einem Profil geformt, beispielsweise durch Plissieren. Geformte Kanalkanten sind stumpf oder abgerundet. Ein Seitenrand des Materialstreifens kommt in der Packung an das untere Ende eines Packungselements zu liegen. Die unten liegenden Seitenränder sind bearbeitet und dadurch so ausgebildet, dass die Randpunkte jeweils eine Kurve bilden, die zwischen zwei parallelen Ebenen liegt, die in einem Abstand von weniger als 2 mm, vorzugsweise weniger als 0.5 mm, von einander entfernt sind.

Die abhängigen Ansprüche 3 bis 8 beziehen sich auf vorteilhafte Ausführungsformen der erfindungsgemässen Packung. Gegenstand des Anspruchs 9 ist eine Kolonne mit einer solchen Packung. Anspruch 10 betrifft Verfahren zum Herstellen der erfindungsgemässen Packung.

Nachfolgend wird die Erfindung anhand der Zeichnungen erläutert. Es zeigen:
- Fig. 1: geometrische Verhältnisse bei einem Materialstreifen, der teilweise mit einer Trapezwellung profiliert ist,
- Fig. 2: einen gewellten Rand an einem planen Materialstreifen,
- Fig. 3: den umgeformten Materialstreifen der Fig. 2 mit trapezförmiger Profilierung, bei dem die Randpunkte auf einem zweidimensionalen Streckenzug liegen,
- Fig. 4: einen Ausschnitt aus einer Packung mit Kreuzkanalstruktur,
- Fig. 5: einen plissierten Materialstreifen mit Kanälen, denen in den Randzonen durch Umformung eine von dem mittleren Streifenbereich abweichende Form gegeben worden ist und
- Fig. 6: eine Trennkolonne mit einer Mehrzahl von in Hauptströmungsrichtung zusammengepressten Packungselementen.

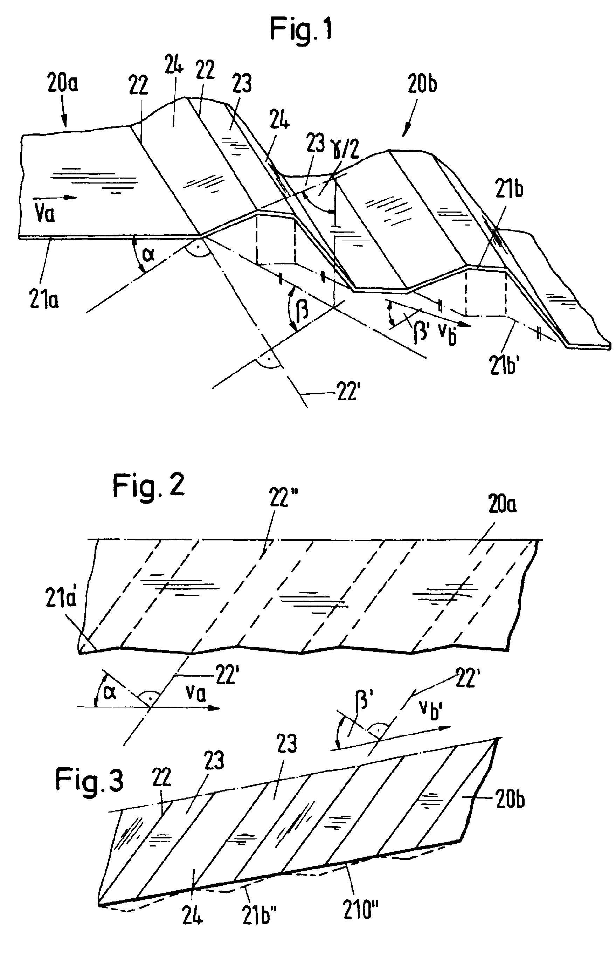

In der oben genannten EP-A 0 739 846 ist ein Verfahren zum Plissieren eines Materialstreifens beschrieben, bei dem eine "dreieckförmige Profilierung" mit scharfkantigen Kanälen gebildet wird. Der Materialstreifen tritt bei diesem Verfahren mit einer Geschwindigkeit vₐ und unter einem Winkel α in eine Umformmaschine ein, wobei α der Winkel zwischen der Transportrichtung und der Richtung der Faltkanten ist. Der plissierte Streifen tritt anschliessend in einer anderen Richtung, unter einem Winkel β, und mit einer kleineren Geschwindigkeit vb aus der Umformmaschine aus. Dabei gilt eine Art Brechungsgesetz für die Beziehung zwischen dem Eintrittswinkel α und dem Austrittswinkel β (vₐ / v_{b} = sinβ / sinα). Wird eine "trapezförmige Profilierung" 20b aus einem planen Materialstreifen 20a gemäss Fig. 1 hergestellt, bei der die in Richtung 22' gerichteten Faltkanten 22 Grenzlinien zwischen Plateauflächen 23 und Flankenflächen 24 bilden, und wird für die Flankenflächen 24 die gleiche Neigung wie bei der dreieckförmigen Profilierung erzeugt (Winkel γ/2), so ist die Austrittsgeschwindigkeit Vb' grösser als v_{b} und der Austrittswinkel β' kleiner β. Der vor der Umformung geradlinige Rand 21a erscheint als Streckenzug 21b, der - anders als bei der dreieckförmigen Profilierung - nicht mehr in einer Ebene liegt. Die Normalprojektion des Rands 21a auf die Ebene, in der der plane Streifen 20a transportiert wird, erscheint als Streckenzug 21b' aus alternierend gleich langen und gleich orientierten Segmenten.

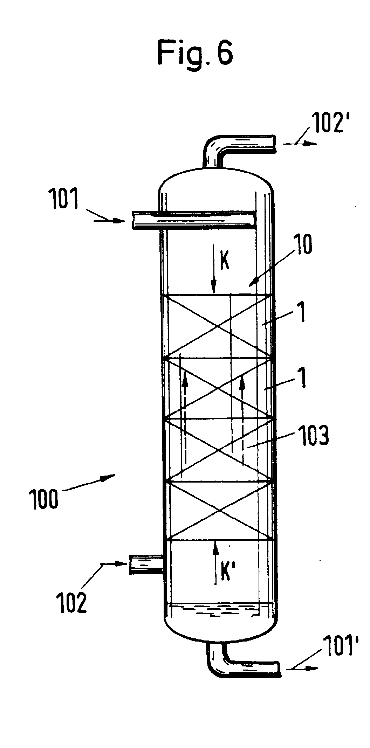

Wird eine Profilierung mit abgerundeten oder stumpfen Faltkanten hergestellt, so entsteht analog zum speziellen Beispiel der Fig. 1 ebenfalls ein Rand, dessen Punkte nicht in einer Ebene liegen. Diese Unebenheit hat nun zur Folge, dass bei einem Trennverfahren ein Rieselfilm in einem Packungselement 1 - siehe Fig. 6 - nicht mehr gleichmässig von den unteren Randkanten 210 abfliesst sondern an den tiefstliegenden Randpunkten abtropft. Ein in einer Packung 10 unten nachfolgendes Packungselement 1 kann aufgrund einer nicht ebenen Ausbildung des Randes 210 den Flüssigkeitsübergang zwischen den Packungselementen 1 noch zusätzlich ungünstig beeinflussen. Dies sind Störeffekte, die einen ungleichmässig abfliessenden Rieselfilm zur Folge haben.

Erfindungsgemäss sorgt man nun dafür, dass die Lagen einen unteren Rand 210 und vorzugsweise auch einen oberen Rand aufweisen, die jeweils eine Kurve bilden, die möglichst zweidimensional ist und in einer horizontalen Ebene liegt. (Unter einer zweidimensionalen Kurve wir hier und nachfolgend eine Kurve verstanden, deren Verlauf sich in einer Ebene erstreckt.) Kleine Abweichungen von einer Zweidimensionaliät haben keinen grossen Einfluss auf die Qualität des Rieselfilms. Es reicht aus, wenn die Seitenränder so ausgebildet sind, dass die Randpunkte einer Lage jeweils eine Kurve bilden, die zwischen zwei parallelen, in einem kleinen Abstand liegenden Ebenen sich befindet. Eine kleine Lücke zwischen benachbarten Packungselemente 1 wird durch den Rieselfilm überbrückt; die Flüssigkeit fliesst weitgehend in einer Weise ab, als wäre keine Lücke vorhanden.

Bei einem Herstellverfahren kann ein planer Materialstreifen 20a in einem ersten Schritt profiliert werden - in eine Kanäle 3 erzeugende Profilform gebracht werden. Sodann kann in einem zweiten Schritt ein Rand 21 a des Materialstreifens durch Entfernen von Material so bearbeitet werden, dass die Punkte des Rands auf einer zweidimensionalen Kurve liegen. Das Material kann durch Schleifen oder Schneiden entfernt werden. Aufgrund dieser Bearbeitung hat der Materialstreifen einen gewellten Rand, wenn er wieder in eine Ebene ausgebreitet wird.

Die Figuren 2 und 3 illustrieren eine weitere Möglichkeit zur Herstellung der erfindungsgemässen Packung, die durch eine Modifikation der in Fig. 1 dargestellten Plissierverfahrens (mit einer trapezförmigen Profilierung) gewonnen wird: Ein Materialstreifen 20a wird am Rand 21 a in seinem planen Zustand durch Entfernen von Material so bearbeitet, dass ein leicht gezahnter oder gewellter Rand 21 a' entsteht, der immer noch plan ist. Diese Formgebung entspricht dem vorgesehenen Plissieren, bei dem Faltkanten 22 in einer Faltrichtung 22' auf die gestrichelt gezeichneten Linien 22" zu liegen kommen. Das Resultat dieses Plissierens ist in Fig. 3 gezeigt. Der Rand 21a' ist in einen zweidimensionalen Streckenzug umgeformt worden, der nun als Gerade 210" erscheint. Mit dem gestrichelten Streckenzug 21b" ist der Rand angedeutet, der ohne die Herstellung des gewellten Rands 21a' entstanden wäre.

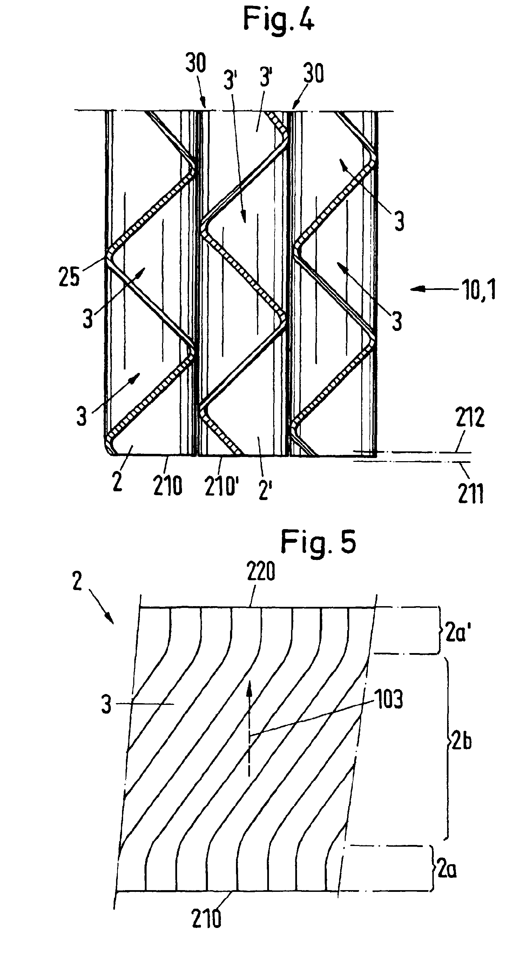

Fig. 4 zeigt einen Ausschnitt aus einer Packung 10 mit Kreuzkanalstruktur, die - siehe Fig. 6 - in der Regel mit einer Vielzahl von Packungselementen 1 in eine Trennkolonne 100 eingebaut ist. Ein solches Packungselement 1 ist aus in Lagen 2, 2' angeordneten Kanälen 3, 3' gebildet, die schräg zu einer Hauptstömungsrichtung 103 orientiert sind. Die Kanäle 3, 3' benachbarter Lagen 2, 2' bilden Kreuzungsstellen auf einer Ebene 30, an welcher die sich kreuzenden Kanäle 3, 3' gegeneinander offen sind. Hergestellt werden die Lagen 2, 2' aus Materialstreifen durch Plissieren, bei dem zickzackartig gefaltete oder gewellte Folien mit Kanalkanten 25 entstehen. Die Kanalkanten 25 sind abgerundet; sie können auch mit einer schmalen Plateaufläche 23 (vgl. Fig. 1) abgestumpft sein. Erfindungsgemäss befindet sich ein unterer Rand 210 zwischen horizontalen Ebenen 212, 211, die in einem Abstand von weniger als 2 mm, vorzugsweise weniger als 0.5 mm, von einander entfernt sind.

Mit Vorteil befinden sich alle unten liegenden Seitenränder 210, 210' des Packungselements 1 zwischen den gleichen horizontalen Ebenen 212, 211. Ebenfalls vorteilhaft ist, wenn oben liegende Seitenränder 220 der Packungselemente 1 - vgl. Fig. 5 - in gleicher Weise wie die unten liegenden ausgebildet sind.

Fig. 5 zeigt einen plissierten Materialstreifen 2, dessen Randzonen 2a und 2a' umgeformt sind. Bei der Umformung ist eine ursprüngliche Form, die in einem mittleren Streifenbereich 2b noch vorliegt, so umgestaltet worden, dass die zuvor geradlinigen Kanäle 3 in den Randzonen 2a und 2a' neu gekrümmt sind. In diesen Randzonen 2a und 2a' ist der Strömungswiderstand eines in der Hauptströmungsrichtung 103 sich bewegenden Gases kleiner als in dem mittleren Bereich 2b des Packungselements 1. Es kann auch nur die untere Randzone 2a umgeformt sein. (Vgl. dazu die europäische Patentschrift EP 0 707 885.)

Eine extremere Umformung der Randzonen 2a und 2a' ist relativ einfach herstellbar, nämlich durch ein Zusammengepressen dieser Zonen zu einem planen Randstreifen. (Vgl. dazu die genannte EP 0 707 885, insbesondere Fig. 9. Die in der Einleitung genannten Versuche wurden mit solchen Kreuzkanalstruktur-Packungen, deren Lagen plangepresste Randstreifen haben, durchgeführt.) Bei dieser extremen Umformung und der Umformung gemäss Fig. 5 ergeben sich in der Regel zusätzliche Abweichungen der Randkanten oder Seitenränder 210, 220 von einer horizontalen Ebene.

Die Materialstreifen 20a, aus denen die Packung 10 hergestellt wird, können mit feinen Riffelungen, lochförmigen Durchbrüchen und/oder Durchbrüche bildenden Umformungen strukturiert sein. Bei Durchbrüche bildenden Umformungen wird kein Material entfernt, sondern es werden - vor der Umformung - an vorbestimmten Stellen lediglich Schnitte in die Streifen 20a gemacht.

Bei der in Fig. 6 dargestellten Trennkolonne 100 sind die Packungselemente 1 durch eine Kraft K und eine Gegenkraft K' in der Hauptströmungsrichtung 103 zusammengepresst. Durch das Zusammenpressen werden Lücken zwischen übereinander angeordneten Packungselementen 1 verkleinert.

Die Trennkolonne 100 wird zur Durchführung eines Stoffaustausches verwendet, nämlich zwischen zwei Fluiden, einer Flüssigkeit 101 (Rieselfilm) und einem Gas 102, wobei der Strom des gasförmigen Fluids 102 sich in der Hauptströmungsrichtung 103 nach oben bewegt. Die behandelte Flüssigkeit 101 und das behandelte Gas 102 verlassen die Kolonne 100 als Gas 102' bzw. Flüssigkeit 101'. Die erfindungsgemässe Packung eignet sich ausser für Destillationsverfahren auch beispielsweise für Absorptionsverfahren.

Es können die inneren Oberflächen der Packungselemente 1, d. h. die Oberflächen der Kanäle 3, katalytisch wirksame Stoffe tragen, so dass eine Reaktivdestillation ausführbar ist. Zum gleichen Zweck können auch kissenförmige Hohlräume in den Packungselementen integriert sein, die Fluide 101, 102 durchlassende Wände aufweisen und die katalytisch wirksame Stoffe enthalten.

## Patentansprüche

1. Geordnete Packung (10) für Trennkolonnen (100), mit in profilierten Lagen (2, 2') angeordneten Kanälen (3, 3'), die schräg zu einer Hauptstömungsrichtung (103) orientiert sind, wobei die Lagen aus folienartigen oder gewebeförmigen Materialstreifen (20a) zu einem Profil geformt - beispielsweise plissiert - sind, geformte Kanalkanten (25) stumpf oder abgerundet sind und ein Seitenrand (21a, 210) des Materialstreifens in der Packung an das untere Ende eines Packungselements zu liegen kommt,
dadurch gekennzeichnet, dass die unten liegenden Seitenränder (210) bearbeitet und dadurch so ausgebildet sind, dass die Randpunkte jeweils eine Kurve (21b) bilden, die zwischen zwei parallelen Ebenen liegt (211, 212), die in einem Abstand von weniger als 2 mm, vorzugsweise weniger als 0.5 mm, von einander entfernt sind.

2. Geordnete Packung (10) für Trennkolonnen (100) mit Packungselementen (1), die in Lagen (2, 2') angeordnete, vorzugsweise schräg zu einer Hauptstömungsrichtung (103) orientierte Kanäle (3, 3') enthalten, wobei die Lagen aus folienartigen oder gewebeförmigen Materialstreifen (20a) geformt sind und eine Zone (2a) an einem unteren Seitenrand (210) umgeformt ist, so dass sich in dieser Randzonen (2a) eine Kanalstruktur von jener in einem mittleren Bereich (2b) der Lagen unterscheidet,
dadurch gekennzeichnet, dass die unten liegenden Seitenränder (210) bearbeitet und dadurch so ausgebildet sind, dass die Randpunkte jeweils eine Kurve (21b) bilden, die zwischen zwei parallelen Ebenen liegt (211, 212), die in einem Abstand von weniger als 2 mm, vorzugsweise weniger als 0.5 mm, von einander entfernt sind.

3. Packung nach Anspruch 1 oder 2, dadurch gekennzeichnet, dass alle unten liegenden Seitenränder (210) der Packungselemente (1) zwischen den gleichen horizontalen Ebenen (211, 212) liegen.

4. Packung nach einem der Ansprüche 1 bis 3, dadurch gekennzeichnet, dass die oben liegenden Seitenränder der Packungselemente (1) in gleicher Weise wie die unten liegenden ausgebildet sind.

5. Packung nach einem der Ansprüche 1 bis 4, dadurch gekennzeichnet, dass die Packungselemente (1) mittels Kräften (K, K'), die in der Hauptströmungsrichtung (103) wirken, zusammengepresst sind.

6. Packung nach einem der Ansprüche 1 bis 5, dadurch gekennzeichnet, dass die Kanäle (3, 3') eine Kreuzkanalstruktur mit sich offen kreuzenden Kanälen bilden, wobei eine streifenförmige Zone (2a) am unteren Rand (210) so umgeformt ist, dass in dieser Randzone der Strömungswiderstand eines in der Hauptströmungsrichtung (103) sich bewegenden Gases (102) kleiner ist als in einem mittleren Bereich (2b) des Packungselements.

7. Packung nach einem der Ansprüche 1 bis 5, dadurch gekennzeichnet, dass die Materialstreifen mit Riffelungen, lochförmigen Durchbrüchen und/oder Durchbrüche bildenden Umformungen strukturiert sind.

8. Packung nach einem der Ansprüche 1 bis 6, dadurch gekennzeichnet, dass die inneren Oberflächen der Packungselemente katalytisch wirksame Stoffe tragen und/oder dass Hohlräume in den Packungselementen integriert sind, die Fluide durchlassende Wände aufweisen und katalytisch wirksame Stoffe enthalten.

9. Kolonne mit einer Packung gemäss einem der Ansprüche 1 bis 8 zur Durchführung eines Stoffaustauschs zwischen einem Rieselfilm und einem Strom eines gasförmigen Fluids.

10. Verfahren zum Herstellen einer Packung gemäss einem der Ansprüche 1 bis 8, dadurch gekennzeichnet, dass in einem ersten Schritt ein planer Materialstreifen (20a) durch Umformung in eine Kanäle (3) erzeugende Profilform gebracht wird, insbesondere plissiert wird, und in einem zweiten Schritt ein Rand (21a) des Materialstreifens durch Entfernen von Material, insbesondere durch Schleifen oder Schneiden, so bearbeitet wird, dass die Punkte des neu gebildeten Rands (210) auf einer zumindest angenähert zweidimensionalen Kurve liegen, oder dass in einem ersten Schritt ein Rand (21a, 21a') eines planen Materialstreifens (20a) durch Entfernen von Material geeignet gewellt wird, wobei die Wellenform einem vorgesehenen Plissieren entspricht, und in einem zweiten Schritt das Plissieren auf die Wellung des Rands (21a') abgestimmt vorgenommen wird, wobei die Punkte des umgeformten Rands (210) auf eine zumindest angenähert zweidimensionale Kurve zu liegen kommen.
